# EUROPEAN PATENT APPLICATION

(11) **EP 2 975 442 A1**
(43) Date of publication of application: **20.01.2016**
(21) Application number: 15163375.7
(22) Date of filing: 13.04.2015
(51) Int. Cl.: G02B 6/42

(54) **OPTICAL TRANSCEIVER DEVICE**

(30) Priority: 17.07.2014 CN 201420396478 U
(71) Applicant: Sercomm Corporation, Taipei 115 (TW)
(72) Inventor: Lefand, Guillaume, 92140 Clamart (FR)
(74) Representative: von Kreisler Selting Werner - Partnerschaft von Patentanwälten und Rechtsanwälten mbB

(57) **Abstract**

A optical transceiver device including a small form-factor pluggable (SFP) transceiver (110), a fiber module (120), and a retainer (130) is provided. The SFP transceiver comprises a first connection portion (111), and the fiber module comprises a second connection portion (121), wherein the first connection portion is connected to the second connection portion. The retainer encompasses the first connection portion and the second connection portion.

## Description

### TECHNICAL FIELD

The disclosure relates in general to an optical transceiver device, and more particularly to a fiber optical transceiver device.

### BACKGROUND

Small form-factor pluggable (SFP) transceivers are optical transceivers for transmitting and receiving optical signals over optical fibers. When a fiber detaches from a SFP transceiver, the signal transmission would fail.

### SUMMARY

The disclosure is directed to an optical transceiver device. In the embodiments of the present disclosure, the retainer encompasses the region where the SFP transceiver is connected to the fiber module, preventing users from accidentally unplugging the fiber module from the SFP transceiver; as such, the fiber module is more firmly and stably fixed to the SFP transceiver.

According to one embodiment, an optical transceiver device is provided. The optical transceiver device includes a small form-factor pluggable (SFP) transceiver, a fiber module, and a retainer. The SFP transceiver comprises a first connection portion, and the fiber module comprises a second connection portion, wherein the first connection portion is connected to the second connection portion. The retainer encompasses the first connection portion and the second connection portion.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1A is a cross-sectional view of an optical transceiver device according to an embodiment of the present disclosure;
FIG. 1B is a three-dimensional view of a small form-factor pluggable (SFP) transceiver and a fiber module of FIG. 1A;
FIG. 1C is a three-dimensional view of a retainer of FIG. 1A;
FIG. 2A is a cross-sectional view of an optical transceiver device according to another embodiment of the present disclosure;
FIG. 2B is a three-dimensional view of a retainer of FIG. 2A;
FIG. 3A is a cross-sectional view of an optical transceiver device according to a further embodiment of the present disclosure;
FIG. 3B is a three-dimensional view of a retainer of FIG. 3A;
FIG. 4A is a cross-sectional view of an optical transceiver device according to a still further embodiment of the present disclosure;
FIG. 4B is a three-dimensional view of a SFP transceiver and a fiber module of FIG. 4A;
FIG. 4C is a three-dimensional view of a retainer of FIG. 4A;
FIG. 4D is a three-dimensional view of the SFP transceiver and the fiber module of FIG. 4A connected to each other;
FIG. 4E is a three-dimensional view of the retainer of FIG. 4A assembled on the SFP transceiver and the fiber module of FIG. 4A;
FIG. 4F is a three-dimensional view of the optical transceiver device 400 of FIG. 4A;
FIG. 5A is a cross-sectional view of an optical transceiver device according to a still another embodiment of the present disclosure;
FIG. 5B is a three-dimensional view of a fiber module of FIG. 5A; and
FIG. 5C is a three-dimensional view of a retainer of FIG. 5A.

### DETAILED DESCRIPTION

The embodiments of the present disclosure are described in details with reference to the accompanying drawings. The details of the structures of the embodiments are for exemplification only, not for limiting the scope of protection of the disclosure. Moreover, secondary elements are omitted in the disclosure of the embodiments for highlighting the technical features of the disclosure. Identical elements of the embodiments are designated with the same reference numerals. Similar elements of the embodiments are designated with similar reference numerals. Also, it is also important to point out that the illustrations may not be necessarily be drawn to scale, and that there may be other embodiments of the present disclosure which are not specifically illustrated. Thus, the specification and the drawings are to be regard as an illustrative sense rather than a restrictive sense.

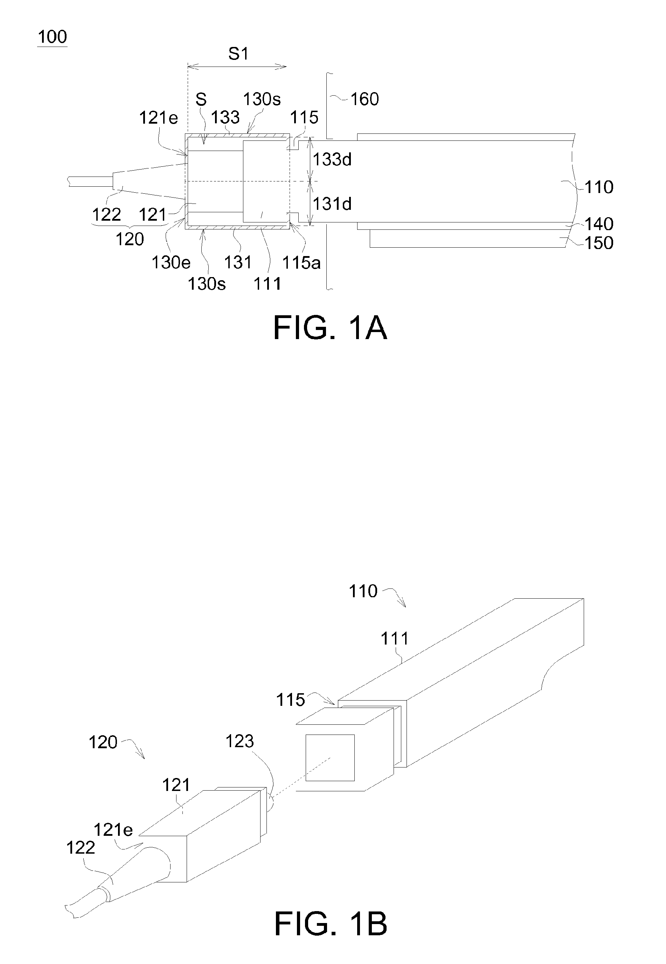

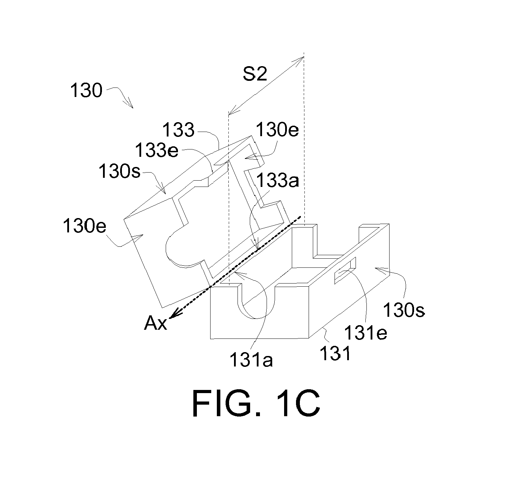

FIG. 1A is a cross-sectional view of an optical transceiver device according to an embodiment of the present disclosure, FIG. 1B is a three-dimensional view of a small form-factor pluggable (SFP) transceiver and a fiber module of FIG. 1A, and FIG. 1C is a three-dimensional view of a retainer of FIG. 1A. Referring to FIGS. 1A-1C, the optical transceiver device 100 includes a SFP transceiver 110, a fiber module 120, and a retainer 130. The SFP transceiver 110 is connected to the fiber module 120 for transmitting optical signals to and/or receiving optical signals from external electronic devices.

The SFP transceiver 110 comprises a first connection portion 111, the fiber module 120 comprises a second connection portion 121, and the first connection portion 111 is connected to the second connection portion 121. The retainer 130 encompasses the first connection portion 111 and the second connection portion 121. The retainer 130 prevents users from accidentally unplugging the fiber module 120 from the SFP transceiver 110; as such, the fiber module 120 is more firmly and stably fixed to the SFP transceiver 110.

The SFP transceiver 110 produces heat while in operation; the retainer 130 can prevent users from directly touching the hot surface of the SFP transceiver 110 and being hurt. To enhance the protection, the retainer 130 may be made of a plastic material having a relative low thermal conductivity coefficient. Furthermore, the inner surface of the retainer 130 may be separated from the first connection portion 111 and the second connection portion 121 by a spacing S. The spacing S allows air to flow therein and is advantageous to heat dissipation. The retainer 130 may have some vents.

As illustrated in FIGS. 1A-1B, the fiber module 120 comprises a fiber 123, a fiber ferrule 122, and the second connection portion 121. The fiber ferrule 122 covers the fiber 123, and the second connection portion 121 is sleeved on the fiber ferrule 122. An end of the fiber 123 is exposed from the fiber module 120 for connecting to the SFP transceiver 110.

As illustrated in FIG. 1A, the SFP transceiver 110 is received within a fiber receptacle 140 defined by a housing 160 of an electronic device. In particular, the SFP transceiver 110 is partially received within the fiber receptacle 140 and partially exposed outside the housing 160, such that the fiber module 120 can be easily connected to the SFP transceiver 110. The SFP transceiver 110 is electrically connected to a circuit board 150 of the electronic device. The fiber receptacle 140 and the circuit board 150 are located in the housing 160, and the SFP transceiver 110 is electrically connected to the circuit board 150 via the fiber receptacle 140.

A user would have to remove the retainer 130 before unplugging the SFP transceiver 110 from the electronic device. As such, the retainer 130 can further secure the plugged SFP transceiver 110 to the electronic device and prevent accidental unplugging.

As illustrated in FIG. 1C, the retainer 130 comprises a first casing 131 and a second casing 133, and the first casing 131 is rotatably connected to the second casing 133. An edge 131 a of the first casing 131 is connected to an edge 133a of the second casing 133 to enable the first casing 131 to rotate around an axis Ax with respect to the second casing 133, making it a lot easier to assemble the retainer 130 on and dissemble the retainer 130 from the first connection portion 111 and the second connection portion 121.

In the present embodiment, as illustrated in FIGS. 1A and 1C, the depth 131 d of the first casing 131 is about equal to the depth 133d of the second casing 133.

As illustrated in FIG. 1C, the first casing 131 may comprise a first engaging element 131e, and the second casing 133 may comprise a second engaging element 133e. The first engaging element 131e is engaged to the second engaging element 133e for fixing the first casing 131 to the second casing 133. As such, the first casing 131 and the second casing 133 forms a receiving space for retaining the region where the SFP transceiver 110 is connected to the fiber module 120. For example, the first engaging element 131e may be a latch hole, and the second engaging element 133e may be a latch.

In the embodiment illustrated in FIGS. 1A and 1C, the SFP transceiver 110 has a groove 115, and the retainer 130 comprises a plurality of sidewalls 130s and two end walls 130e opposite to each other. While the SFP transceiver 110 is received within the fiber receptacle 140, the groove 115 is exposed from the housing 160. The sidewalls 130s and the end walls 130e encompass the first connection portion 111 and the second connection portion 121, and the end walls 130e are respectively in direct contact with the groove 115 and an end surface 121e of the second connection portion 121. As such, the first connection portion 111 and the second connection portion 121 are secured by the end walls 130e and fixed within the retainer 130, and the positions of the SFP transceiver 110 and the fiber module 120 with respect to each other are nicely fixed.

In the embodiment illustrated in FIG. 1A, the groove 115 has vertical inner walls. The end walls 130e are respectively in direct contact with one inner wall 115a of the groove 115 and the end surface 121e of the second connection portion 121. The vertical inner wall 115a provides a larger contact area with the contacted end wall 130e of the retainer 130, and thus the first connection portion 111 and the second connection portion 121 are better retained within the end walls 130e of the retainer 130, and the positions of the SFP transceiver 110 and the fiber module 120 with respect to each other are fixed more stably.

In the embodiments illustrated in FIGS. 1A and 1C, the distance S1 between the groove 115 of the SFP transceiver 110 and the end surface 121 e of the second connection portion 121 is substantially equal to the distance S2 between the two end walls 130e of the retainer 130. With such design, the first connection portion 111 and the second connection portion 121 perfectly fit in the retainer 130 with sustaining forces provided by the two end walls 130e from two opposite directions.

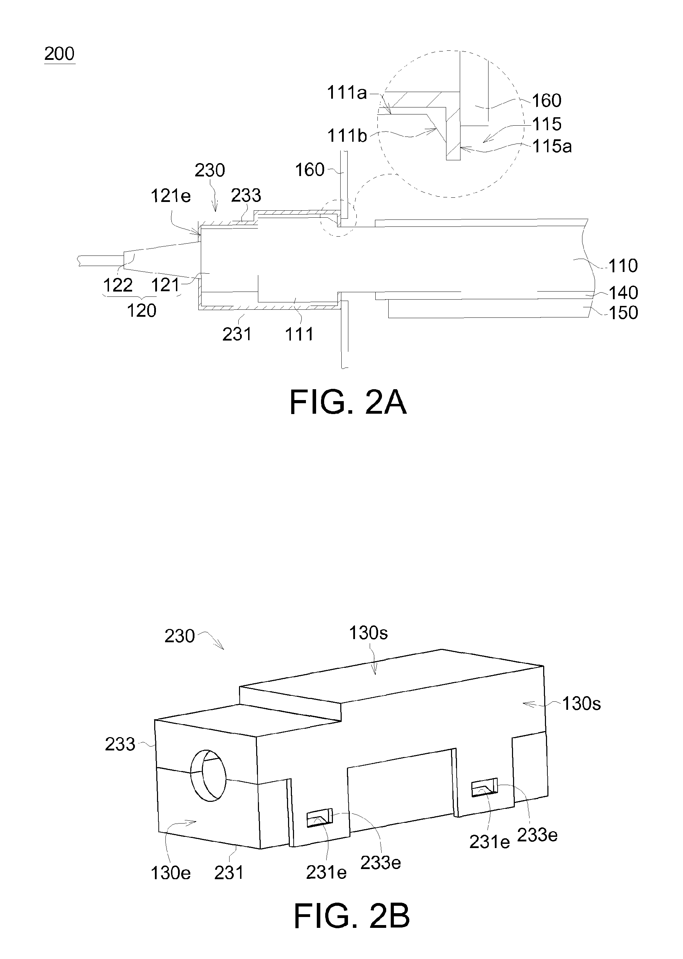

FIG. 2A is a cross-sectional view of an optical transceiver device 200 according to another embodiment of the present disclosure, and FIG. 2B is a three-dimensional view of a retainer 230 of FIG. 2A. The elements in the present embodiment sharing the same or similar labels with those in the previous embodiment are the same or similar elements having same or similar functions, and the description of which is omitted or simplified.

Referring to FIGS. 2A-2B, the first casing 231 may comprise a plurality of first engaging elements 231e, and the second casing 233 may comprise a plurality of second engaging elements 233e. The first engaging elements 231e are respectively engaged to the corresponding second engaging elements 233e for fixing the first casing 231 to the second casing 233. As such, the first casing 231 and the second casing 233 embrace a receiving space for retaining the region where the SFP transceiver 110 is connected to the fiber module 120. For example, the first engaging elements 231e may be latches, and the second engaging elements 233e may be latch holes, or vice versa.

Referring to FIGS. 2A-2B, at least a portion of the structure of the retainer 230 may be substantially conformal with a portion of the outline of the first connection portion 111 and/or the second connection portion 121. For example, as illustrated in FIGS. 2A-2B, the structure of the second casing 233 is substantially conformal with the top surface 111a of the first connection portion 111 and the top surface 121 a of the second connection portion 121. In the embodiment illustrated in FIG. 2A, the first connection portion 111 of the SFP transceiver 110 further has a slanted surface 111 b connecting the inner wall 115a of the groove 115 and the top surface 111a of the first connection portion 111.

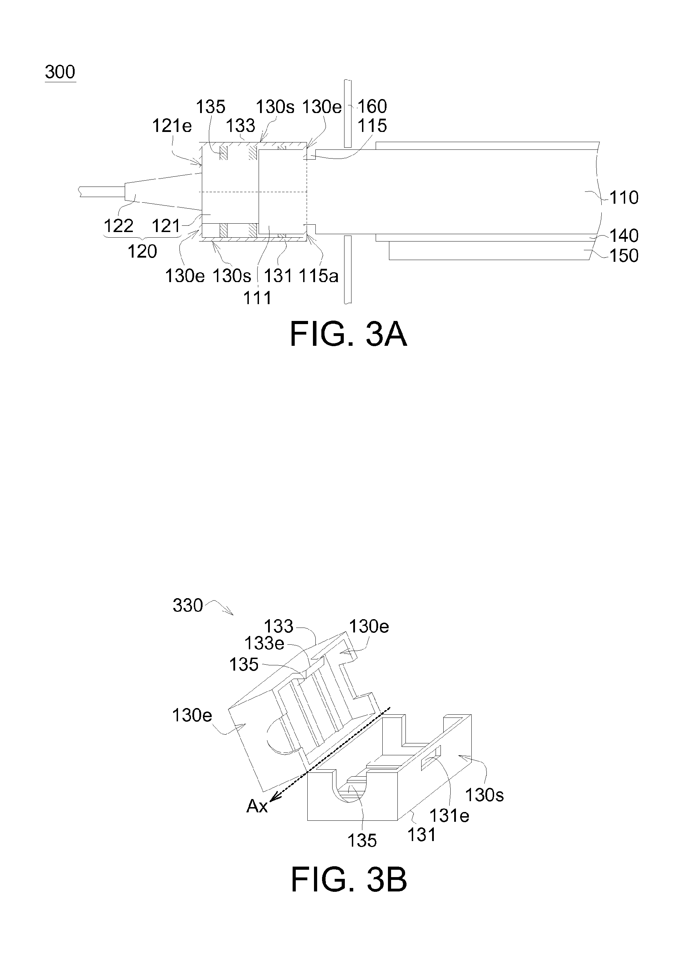

FIG. 3A is a cross-sectional view of an optical transceiver device 300 according to a further embodiment of the present disclosure, and FIG. 3B is a three-dimensional view of a retainer 330 of FIG. 3A. The elements in the present embodiment sharing the same or similar labels with those in the previous embodiments are the same or similar elements having similar functions, and the description of which is omitted or simplified.

Referring to FIGS. 3A-3B, the retainer 330 comprises a plurality of walls 130s and 130e and a protrusion structure 135 on an inner surface of at least one of the walls. The protrusion structure 135 extends from the inner surface of the retainer 330 toward and then abuts upon the SFP transceiver 110 and/or the fiber module 120. With such design, the first connection portion 111 and the second connection portion 121 fit in the retainer 330 more perfectly with sustaining forces provided by the protrusion structure 135; accordingly, while the spacing between the walls of the retainer 330 and the first connection portion 111 and/or the second connection portion 121 allows air to flow therein for providing a better heat dissipation, the protrusion structure 135 provides a stable support for the retainer 330 located above the spacing. In the embodiment, the protrusion structure 135 further comprises at least one of a bump and a rib. As illustrated in FIGS. 3A-3B, the protrusion structure 135 includes a plurality of ribs. In other embodiments, the protrusion structure 135 may include a plurality of bumps and/or ribs.

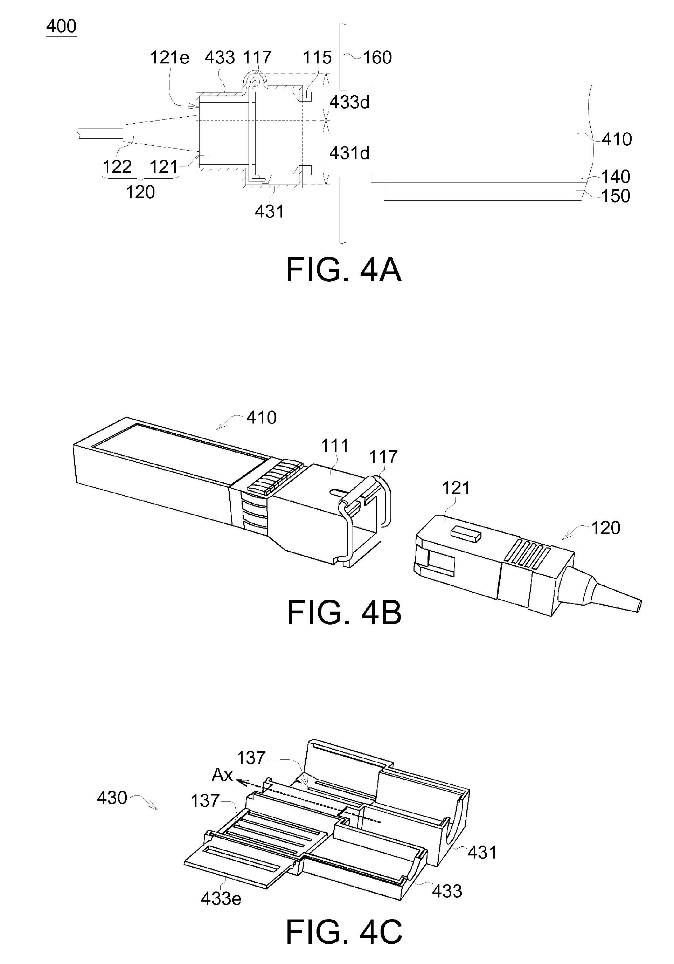

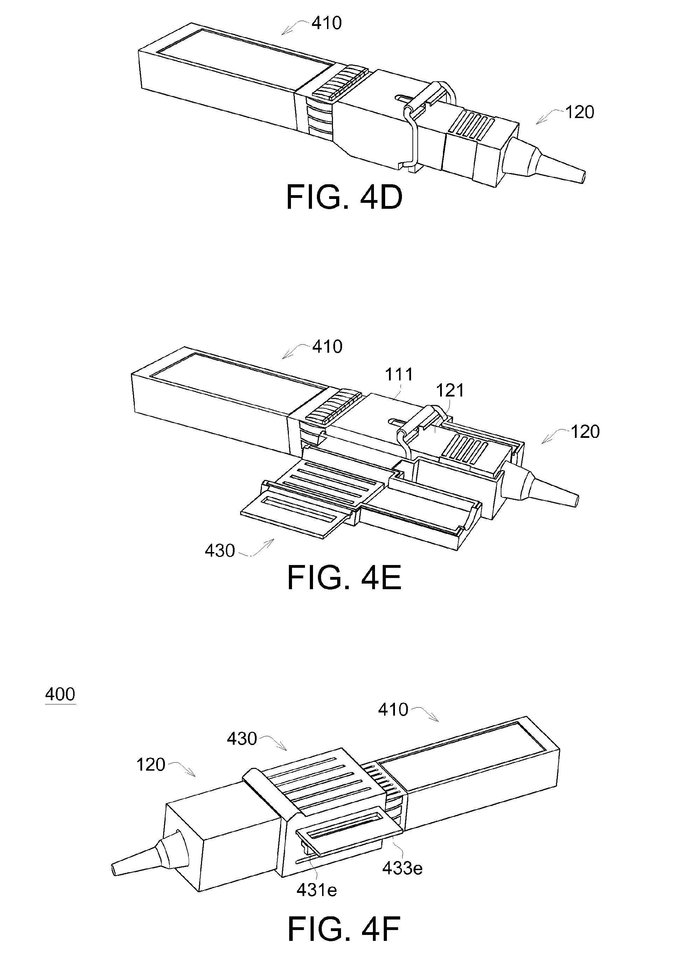

FIG. 4A is a cross-sectional view of an optical transceiver device 400 according to a still further embodiment of the present disclosure, FIG. 4B is a three-dimensional view of a SFP transceiver 410 and a fiber module 120 of FIG. 4A, FIG. 4C is a three-dimensional view of a retainer 430 of FIG. 4A, FIG. 4D is a three-dimensional view of the SFP transceiver 410 and the fiber module 120 of FIG. 4A connected to each other, FIG. 4E is a three-dimensional view of the retainer 430 of FIG. 4A assembled on the SFP transceiver 410 and the fiber module 120 of FIG. 4A, and FIG. 4F is a three-dimensional view of the optical transceiver device 400 of FIG. 4A. The elements in the present embodiment sharing the same or similar labels with those in the previous embodiments are the same or similar elements having the same or similar functions, and the description of which is omitted or simplified.

Referring to FIGS. 4A-4B, the SFP transceiver 410 further comprises a handle 117 covered by the retainer 430. The handle 117 allows a user to easily extract the SFP transceiver 410 from the fiber receptacle 140. Referring to FIGS. 4A-4F, in the present embodiment, the depth 431 d of the first casing 431 is larger than the depth 433d of the second casing 433. As illustrated in FIG. 4E, the first connection portion 111 of the SFP transceiver 410 along with the second connection portion 121 of the fiber module 120 are received within the retainer 430. While the difference between the depths of the first casing 431 and the second casing 433 represents that the first casing 431 has a relative large receiving space and that the relatively small depth 433d makes the second casing 433 a nice lid, such depth difference allows the second casing 433 to rotate around the axis Ax more easily, and thus the assembly of the retainer 430 on and disassembly of the retainer 430 from the connected SFP transceiver 110 and the fiber module 120 are more convenient.

In the embodiment, the retainer 430 comprises a plurality of walls, and at least one of the walls may have at least a perforation 137. As illustrated in FIG. 4C, the walls of the retainer 430 have a plurality of perforations 137, and the perforations 137 are located on both the first casing 431 and the second casing 433. In the embodiments, the perforations 137 may be through holes or slits.

Referring to FIGS. 4B and 4D, the second connection portion 121 of the fiber module 120 may be a snap-in connector, such as a SC connector. The SC connector comprises such as a locking tab or a hook for engaging to the corresponding mechanism within the inserting hole of the first connection portion 111.

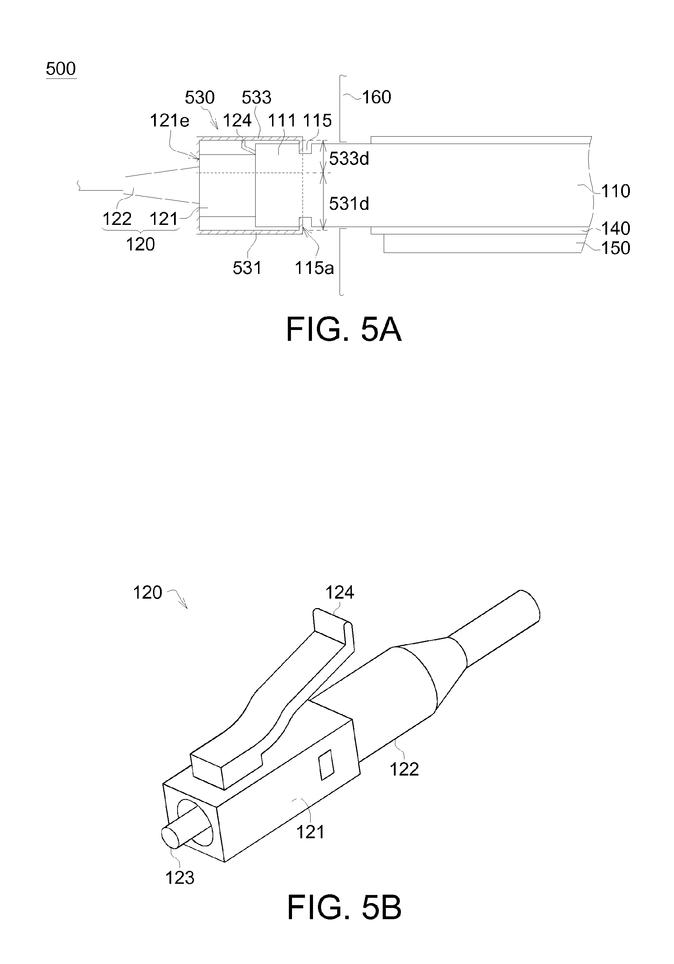

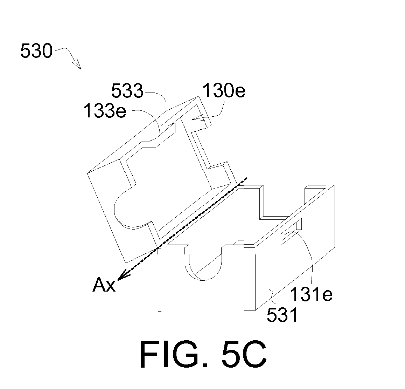

FIG. 5A is a cross-sectional view of an optical transceiver device 500 according to a still another embodiment of the present disclosure, FIG. 5B is a three-dimensional view of a fiber module 120 of FIG. 5A, and FIG. 5C is a three-dimensional view of a retainer 530 of FIG. 5A. The elements in the present embodiment sharing the same or similar labels with those in the previous embodiments are the same or similar elements having the same or similar functions, and the description of which is omitted or simplified.

Referring to FIGS. 5A and 5C, in the present embodiment, the depth 531 d of the first casing 531 is larger than the depth 533d of the second casing 533. As illustrated in FIG. 5A, the first connection portion 111 of the SFP transceiver 110 along with the second connection portion 121 of the fiber module 120 are received within the retainer 530. The difference between the depths of the first casing 531 and the second casing 533 allows the second casing 533 to rotate around the axis Ax more easily, and thus the assembly of the retainer 530 on and disassembly of the retainer 530 from the connected SFP transceiver 110 and the fiber module 120 are more convenient.

Referring to FIGS. 5B-5C, the second connection portion 121 of the fiber module 120 may be a snap-in connector, such as a LC connector. The LC connector comprises such as a spring element jack strip 124 for engaging to the corresponding mechanism within the inserting hole of the first connection portion 111.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. An optical transceiver device (100), **characterized in that** the optical transceiver device comprises:
a small form-factor pluggable (SFP) transceiver (110) comprising a first connection portion (111);
a fiber module (120) comprising a second connection portion (121), wherein the first connection portion is connected to the second connection portion; and
a retainer (130) encompassing the first connection portion and the second connection portion.

2. The optical transceiver device according to claim 1, **characterized in that** the retainer (130) is separated from the first connection portion (111) and the second connection portion (121) by a spacing (S).

3. The optical transceiver device according to claim 1, **characterized in that** a portion of the retainer is conformal with a portion of an outline of at least one of the first connection portion (111) and the second connection portion (121).

4. The optical transceiver device according to claim 1, **characterized in that** the retainer comprises:
a first casing (131); and
a second casing (133), wherein an edge (131 a) of the first casing is connected to an edge (133a) of the second casing to enable the first casing to rotate around an axis (Ax) with respect to the second casing.

5. The optical transceiver device according to claim 4, **characterized in that** the first casing comprises a first engaging element (131e), the second casing comprises a second engaging element (133e), and the first engaging element is engaged to the second engaging element for fixing the first casing to the second casing.

6. The optical transceiver device according to claim 1, **characterized in that** the retainer comprises a plurality of walls (130e/130s), and at least one of the walls has at least a perforation (137).

7. The optical transceiver device according to claim 1, **characterized in that** the retainer comprises:
a plurality of walls; and
a protrusion structure (135) on an inner surface of at least one of the walls, wherein the protrusion structure is in direct contact with at least one of the SFP transceiver and the fiber module, the protrusion structure comprises at least one of a bump and a rib.

8. The optical transceiver device according to claim 1, **characterized in that** the SFP transceiver has a groove (115), the retainer comprises a plurality of sidewalls (130s) and two end walls (130e) opposite to each other, the sidewalls and the end walls encompass the first connection portion and the second connection portion, and the end walls are respectively in direct contact with the groove and an end surface of the second connection portion.

9. The optical transceiver device according to claim 8, **characterized in that** the end walls are respectively in direct contact with an inner wall of the groove and the end surface of the second connection portion.

10. The optical transceiver device according to claim 8, **characterized in that** a distance (S1) between the groove and the end surface of the second connection portion is substantially equal to a distance (S2) between the two end walls of the retainer.

11. The optical transceiver device according to claim 1, **characterized in that** the retainer comprises a plastic material.
